# EUROPÄISCHE PATENTSCHRIFT

(11) **EP 3 251 160 B1**
(45) Veröffentlichungstag und Bekanntmachung des Hinweises auf die Patenterteilung: **08.01.2020**
(21) Anmeldenummer: 16702383.7
(22) Anmeldetag: 27.01.2016
(51) Int. Cl.: H01M 4/36, H01M 4/38, H01M 4/587, H01M 10/0525, C01B 33/02, C01B 32/05

(54) **LITHIIERTE SILICIUM/KOHLENSTOFF-KOMPOSITMATERIALIEN UND VERFAHREN ZU DEREN HERSTELLUNG**
LITHIATED SILICON/CARBON COMPOSITE MATERIALS AND METHOD FOR PRODUCING THE SAME
MATÉRIAUX COMPOSITES LITHIÉS SILICIUM/CARBONE ET LEUR PROCÉDÉ DE FABRICATION

(30) Priorität: 28.01.2015 DE 102015201461
(43) Veröffentlichungstag der Anmeldung: 06.12.2017
(73) Patentinhaber: Albemarle Germany GmbH, 65926 Frankfurt am Main (DE)
(72) Erfinder: WIETELMANN, Ulrich, 61381 Friedrichsdorf (DE); EMMEL, Ute, 65929 Frankfurt am Main (DE); KRÄMER, Gerd, 61118 Bad Vilbel (DE); KURTH, Christopher, 63110 Rodgau (DE); SCHERER, Stefan, 64347 Griesheim (DE); BUHRMESTER, Thorsten, 64409 Messel (DE)
(86) Internationale Anmeldenummer: PCT/EP2016/051680
(87) Internationale Veröffentlichungsnummer: WO 2016/120313

(56) Entgegenhaltungen:
- US-A1- 2004 137 327
- DATTA M K ET AL: "In situ electrochemical synthesis of lithiated silicon-carbon based composites anode materials for lithium ion batteries", JOURNAL OF POWER SOURCES, ELSEVIER SA, CH, Bd. 194, Nr. 2, 21. Juni 2009 (2009-06-21) , Seiten 1043-1052, XP026499697, ISSN: 0378-7753, DOI: 10.1016/J.JPOWSOUR.2009.06.033 [gefunden am 2009-06-21]

## Beschreibung

Die Erfindung betrifft lithiierte Kompositmaterialien bestehend aus den Elementen Li, Si und C, wobei das elektrochemische Ruhepotential dieser Verbindungen unterhalb von ca. 2 V, bevorzugt unterhalb von 1 V gemessen gegen Li/Li⁺ liegt.

### Stand der Technik

Silicium ist eines der vielversprechendsten Anodenmaterialien für Lithiumbatterien der nächsten Generation. Das Halbmetall hat über den Mechanismus der Legierungsbildung eine extrem hohe Aufnahmekapazität für Lithium: so weist beispielsweise die Legierung Li₂₂Si₅ eine maximale theoretische Kapazität von 4200 Ah/kg auf; damit liegt diese mehr als zehnmal höher als die der z.Zt. in Lithiumionenbatterien verbauten Graphite (372 Ah/kg). Leider führen die hohen Volumenänderungen (>300 %) beim Laden/Entladen zu einer Pulverisierung und einer Verbindungstrennung vom Stromableiter, so dass eine schlechte Reversibilität und ein extrem schneller Kapazitätsabfall stattfindet. Für Graphen wird eine reversible Kapazität von 740 mAh entsprechend einer Zusammensetzung LiC₃ gemäß dem Dokument US 2015/0000118 A1 für möglich gehalten.

Die elektrochemischen Eigenschaften von Silicium können durch Verringerung der Partikelgrößen in den Submikronbereich, durch Legierungsbildung mit anderen Elementen, Nanostrukturierung von Elektroden oder durch Zumischen von Komponenten, die den Volumenwechsel abpuffern (z.B. Kohlenstoff), verbessert werden.

Bei der Verwendung von Silicium als Anodenmaterial in Lithiumbatterien besteht ein weiteres Problem darin, dass beim ersten Lade-/Entladezyklus sehr hohe irreversible Verluste zu verzeichnen sind. Diese sind überwiegend auf den Gehalt an Fremdelementen wie z.B. Sauerstoff, Wasserstoff und anorganischem Kohlenstoff (z.B. Carbonat) zurückzuführen. Die Fremdelemente reagieren irreversibel mit Lithium zu elektrochemisch inaktiven Produkten wie Lithiumoxiden, Lithiumcarbonat, Lithiumcarbid, Lithiumhydroxid etc. US2004/0137327 A1 beschreibt Kompositmaterialien, zur Verwendung als Anodenmaterialen in Lithiumbatterien, welche aus einem Gemisch von pulverförmigem Silicium mit Partikelgröße von 1 µm und Graphit bestehen.

### Aufgabenstellung

Es ist ein hauptsächlich auf Silicium basierendes Material gesucht, das bei der Verwendung als Anodenmaterial in galvanischen Zellen, z.B. Lithiumbatterien
1. geringe irreversible Anfangsverluste,
2. eine hohe Kapazität von mindestens 500, bevorzugt mindestens 1000 Ah/kg und
3. eine ausreichende Zyklenstabilität aufweist.

Dieses Material sollte durch einen kommerziell vorteilhaften Prozess herstellbar sein.

### Lösung der Aufgabe

Die Aufgabe wird mit einem Kompositmaterial, bestehend aus dem tribochemisch/ thermisch hergestellten Umsetzungsprodukt von graphitschem oder graphenartigem Kohlenstoff mit elementarem Silicium und elementarem Lithium gelöst, insbesondere wird die Aufgabe mit einem Kompositmaterial nach Anspruch 1 und durch die Verfahren der Ansprüche 3 und 5 gelöst.

Im allgemeinen besitzen die erfindungsgemäßen Kompositmaterialien folgende Summenformel:

SiₓC₁₀₋ₓLi_{z}, wobei

x einen beliebigen Wert von 1 bis 9 annehmen kann
und z = a (4,4x + 1/6 (10-x)) mit a = beliebiger Wert von 0,1 bis 1. Der Anteil des Lithiums in dem Kompositmaterial liegt somit im Bereich von 10 bis 100 Mol-% der stöchiometrisch maximal möglichen Lithiumaufnahme (LiC₆ und Li₂₂Si₅ sind die lithiumreichsten bei Raumtemperatur thermodynamisch stabilen Phasen).

Die Herstellung der erfindungsgemäßen Kompositmaterialien erfolgt beispielsweise über einen Mahlprozeß, der optional mit einem Temperungsprozeß kombiniert werden kann. Dazu werden das graphitische Material (beispielsweise Graphitpulver mit Korngrößen zwischen 5 und 200 µm) oder Graphenpulver mit Siliciumpulver (Korngröße 1 bis 100 µm) im Molverhältnis 9:1 bis 1:9 sowie mit Lithiumpulver (Korngröße 5 bis 500 µm) unter Inertgasbedingungen (z.B. Ar) vermischt und anschließend verpreßt oder vermahlen. Dabei bilden sich überraschend zunächst Li-Graphit-Interkalate der Zusammensetzung LiCₒ (o = z.B. 6 oder 12), während keine oder nur eine ganz untergeordnete Reaktion bzw Legierungsbildung zwischen Silicium und Lithiummetall stattfindet.

Die mechanisch induzierte Umsetzung erfolgt im Temperaturbereich zwischen 0 und 120°C, bevorzugt 20 bis 100°C entweder im Vakuum oder unter einer Atmosphäre, deren Bestandteile nicht oder nur akzeptabel langsam mit metallischem Lithium, Silicium und/oder Lithium-Graphit-Interkalationsverbindungen reagieren. Dies ist bevorzugt entweder trockene Luft oder ein Edelgas, besonders bevorzugt Argon.

Das Lithium wird in Pulverform, bestehend aus Partikeln mit einer durchschnittlichen Partikelgröße zwischen etwa 5 und 500 µm, bevorzugt 10 und 200 µm, eingesetzt. Es können sowohl gecoatete Pulver wie z.B. ein von Firma FMC angebotenes stabilisiertes Metallpulver (Lectromax powder 100, SLMP) mit einem Lithiumgehalt von mindestens 97% oder beispielsweise ein mit legierungsbildenden Elementen beschichtetes Pulver mit Metallgehalten von mindestens 95% (WO2013/104787A1) eingesetzt werden. Besonders bevorzugt werden ungecoatete Lithiumpulver mit einem Metallgehalt von ≥ 99% verwendet. Für einen Einsatz im Batteriebereich muß die Reinheit in Bezug auf metallische Verunreinigungen sehr hoch sein. Unter anderem darf der Natriumgehalt nicht > 200 ppm liegen. Bevorzugt liegt der Na-Gehalt ≤ 100 ppm, besonders bevorzugt ≤ 80 ppm.

Als Graphit können alle pulverförmigen Graphitqualitäten, sowohl solche aus natürlichen Vorkommen (sogenannter "Naturgraphit") als auch synthetisch/industriell hergestellte Sorten ("Synthesegraphite") verwendet werden. Es sind sowohl makrokristalline Flockengraphite als auch amorphe oder mikrokristalline Graphite einsetzbar. Hinsichtlich Graphenen gibt es im Grunde keine Einschränkung. Der Sauerstoffgehalt sollte aber unter 5, bevorzugt 1 Gew.% liegen. Das Siliciumpulver hat einen Gehalt von mindestens 80, bevorzugt mindestens 90% Si; es wird angenommen, dass der Rest auf 100 % im wesentlichen aus Sauerstoff besteht.

Die Umsetzung (also die Lithiierung oder Teil-lithiierung) des Graphites oder Graphens erfolgt während einer Vermischung, Verpressung und/oder Vermahlung der beiden Komponenten Lithiumpulver und Graphit- oder Graphenpulver in Gegenwart des Si-Pulvers. Im Labormaßstab kann die Vermahlung mittels Mörser und Pistill erfolgen. Bevorzugt erfolgt die Umsetzung aber in einer mechanischen Mühle, beispielsweise einer Stab-, Schwing- oder Kugelmühle. Besonders vorteilhaft wird die Umsetzung in einer Planetenkugelmühle vorgenommen. Im Labormaßstab kann dafür z.B. die Planetenkugelmühle Pulverisette 7 premium line von Firma Fritsch eingesetzt werden. Bei Verwendung von Planetenkugelmühlen lassen sich überraschenderweise sehr vorteilhaft kurze Reaktionszeiten von < 10 h, häufig sogar < 1 h realisieren.

Die Mischung aus Lithium- und Graphitpulver wird bevorzugt im trockenen Zustand vermahlen. Es kann jedoch auch ein gegenüber beiden Stoffen inertes Fluid bis zu einem Gewichtsverhältnis von bis zu 1:1 (Summe Li+C+Si : Fluid) zugegeben werden. Bei dem inerten Fluid handelt es sich bevorzugt um ein wasserfreies Kohlenwasserstofflösemittel, z.B. ein flüssiges Alkan oder Alkangemisch oder ein aromatisches Kohlenwasserstofflösemittel. Durch die Zugabe von Lösemitteln wird die Heftigkeit des Mahlvorganges gedämpft und die Graphitpartikel werden weniger stark vermahlen.

Die Vermahlungsdauer richtet sich nach verschiedenen Anforderungen und Prozeßparametern:
- Gewichtsverhältnis Mahlkugeln zu Produktmischung
- Art der Mahlkugeln (z.B. Härte und Dichte)
- Intensität der Vermahlung (Umdrehungsfrequenz des Mahltellers)
- Reaktivität des Lithiumpulvers (z.B. Art des Coatings)
- Gewichtsverhältnis Li : C
- Produktspezifische Materialeigenschaften
- gewünschte Partikelgröße etc.

Die Bedingungen können vom Fachmann durch einfache Optimierungs-experimente herausgefunden werden. Im allgemeinen schwanken die Vermahlungsdauern zwischen 5 Minuten und 24 Stunden, bevorzugt zwischen 10 Minuten und 10 Stunden. Nach Beendigung der mechanochemischen Umsetzung liegt ein Komposit bestehend aus lithiiertem oder teil-lithiiertem Graphit/Graphenpulver, weitgehend unverändertem Si-Pulver sowie Lithiummetallresten vor.

Diese lithiierten oder teil-lithiierten Kompositpulver sind gegenüber Umweltbedingungen (Luft und Wasser) sowie vielen funktionalisierten Lösemitteln (z.B. NMP) und Flüssigelektrolytlösungen "aktiv", d.h. sie regieren bzw. zersetzen sich bei längeren Expositionszeiten. Bei Auslagerung in normaler Luft reagiert das enthaltene Lithium unter Wasserstoffentwicklung zu thermodynamisch stabilen Salzen wie Lithiumhydroxid, Lithiumoxid und/oder Lithiumcarbonat. Um diesen Nachteil zumindest weitgehend zu vermeiden, können die lithiierten oder teil-lithiierten Kompositpulver durch einen zweiten Prozeßschritt, ein Coatingverfahren, stabilisiert werden. Dazu wird das lithiierten oder teil-lithiierten Kompositpulver mit einem gasförmigen oder flüssigen Coatingmittel passiviert. Die verwendeten Coatingmittel enthalten gegenüber metallischem Lithium sowie Lithiumgraphit- bzw Lithiumgraphen-interkalationsverbindungen reaktive funktionelle Gruppen oder Molekülbestandteile und sie reagieren deshalb mit dem oberflächenverfügbaren Lithium. Es findet eine Umsetzung der lithiumhaltigen Oberflächenzone unter Bildung von nicht oder wenig luftreaktiven (also thermodynamisch stabilen) Lithiumsalzen (wie z.B. Lithiumcarbonat, Lithiumfluorid, Lithiumhydroxid, Lithiumalkoholaten, Lithiumcarboxylaten etc) statt. Bei diesem Coatingvorgang bleibt der größte Teil des nicht an der Partikeloberfläche befindlichen Lithiums (z.B. des interkalierten Anteils) in aktiver Form, d.h. mit einem elektrochemischen Potential von ≤ 1 V *vs.* Li/Li⁺ erhalten. Solche Coatingmittel sind aus der Lithiumionenbatterie-Technologie als in-*situ*-Filmbildner (auch als SEI-Bildner bezeichnet) für die negativen Elektrode bekannt und beispielsweise in folgendem Übersichtsartikel beschrieben: A. Lex-Balducci, W. Henderson, S. Passerini, Electrolytes for Lithium Ion Batteries, in Lithium-Ion Batteries, Advanced Materials and Technologies, X. Yuan, H. Liu und J. Zhang (Hrsg.), CRC Press Boca Raton, 2012, p 147-196. Im Folgenden werden verwendete Coatingmittel beispielhaft aufgeführt. Als Gase eignen sich N₂, CO₂, CO, O₂, N₂O, NO, NO₂, HF, F₂, PF₃, PF₅, POF₃ u.ä. Verwendete flüssige Coatingmittel sind beispielsweise: Kohlensäureester (z.B. Vinylencarbonat (VC), Vinylethylencarbonat (VEC), Ethylencarbonat (EC), Propylencarbonat (PC), Dimethylcarbonat (DMC), Diethylcarbonat (DEC), Ethylmethylcarbonat (EMC), Fluoroethylencarbonat (FEC)); Lithiumchelatoboratlösungen (z.B. Lithium bis(oxalato)borat (LiBOB), Lithium bis(salicylato)borat (LiBSB), Lithium bis(malonato)borat (LiBMB), Lithium difluorooxalatoborat (LiDFOB), als Lösungen in organischen Lösungsmitteln, bevorzugt ausgewählt aus: sauerstoffhaltigen Heterocyclen wie THF, 2-Methyl-THF, Dioxolan; Kohlensäureestern (Carbonate) wie Ethylencarbonat, Propylencarbonat, Dimethylcarbonat, Diethylcarbonat und/oder Ethylmethylcarbonat; Nitrilen wie Acetonitril, Glutarodinitril; Carbonsäureestern wie Ethylacetat, Butylformiat und Ketonen wie Aceton, Butanon; schwefelorganische Verbindungen (z.B. Sulfite (Vinylethylensulfit, Ethylensulfit); Sulfone, Sultone u.ä.); N-haltige organische Verbindungen (z.B. Pyrrol, Pyridin, Vinylpyridin, Picoline, 1-Vinyl-2-pyrrolidinon); Phosphorsäure; organische phosphorhaltige Verbindungen (z.B. Vinylphosphonsäure); fluorhaltige organische und anorganische Verbindungen (z.B. teilfluorierte Kohlenwasserstoffe, BF₃, LiPF₆, LiBF₄), siliciumhaltige Verbindungen (z.B. Silikonöle, Alkylsiloxane) u.a..

Beim Einsatz von flüssigen Coatingmitteln erfolgt der Coatingprozeß im allgemeinen unter Inertgasatmosphäre (z.B. Argonschutzatmosphäre) bei Temperaturen zwischen 0 und 150°C. Um den Kontakt zwischen dem Coatingmittel und dem lithiierten oder teil-lithiierten Kompositpulver zu erhöhen, sind Misch- oder Rührbedingungen vorteilhaft. Die notwendige Kontaktzeit zwischen Coatingmittel und lithiiertem oder teil-lithiiertem Kompositpulver richtet sich nach der Reaktivität des Coatingmittels, der herrschenden Temperatur und anderer Prozeßparameter. Im allgemeinen sind Zeiten zwischen 1 Minute und 24 Stunden sinnvoll. Das Coating verbessert nicht nur die Handhabungseigenschaften und die Sicherheit bei der Elektroden- (im allgemeinen Anoden-) Herstellung, sondern auch die Anwendungseigenschaften in der elektrochemischen Batteriezelle. Beim Einsatz vorgecoateter Anodenmaterialien entfällt nämlich die *in situ*-Bildung einer SEI (solid electrolyte interface) beim Kontakt des lithiierten oder teil-lithiierten Kompositanodenmaterials mit dem Flüssigelektrolyten der Batteriezelle. Die durch Vorcoating bewirkte Anodenfilmung außerhalb der elektrochemischen Zelle entspricht in ihren Eigenschaften einer sogenannten artifiziellen SEI. Im Idealfall entfällt der ansonsten notwendige Formierprozeß der elektrochemischen Zelle oder er wird zumindest vereinfacht. Die nach dem oben beschriebenen Verfahren lithiierten oder teil-lithiierten und stabilisierten Kompositprodukte können zur Herstellung von Batterieelektroden verwendet werden. Dazu werden sie unter Inert- oder Trockenraumbedingungen mit mindestens einem Bindermaterial und optional mit einem leitfähigkeitsverbessernden Additiv (z.B. Ruße oder Metallpulver, z.B. Ni-Pulver oder -schaum) sowie einem organischen Lösungsmittel gemischt und homogenisiert und diese Dispersion wird durch ein Beschichtungsverfahren (Gießverfahren, Spincoating oder air-brush-Verfahren) auf einen Stromableiter aufgebracht und getrocknet. Die nach erfindungsgemäßem Verfahren hergestellten stabilisierten lithiierten oder teil-lithiierten Kompositpulver sind überraschend gegenüber N-Methylpyrrolidon (NMP) und anderen funktionalisierten organischen Lösungsmitteln wenig reaktiv. Sie können deshalb mit NMP und dem Bindermaterial Polyvinylidendifluorid (PVdF) zu einer vergieß- oder sprühbaren Dispersion verarbeitet werden. Weitere Beispiele für geeignete Bindermaterialien sind unter anderem: Carboxymethylcellulose (CMC), Polyisobutylen (z.B. Oppanol von Firma BASF), Alginsäure.

In einer Variante des erfindungsgemäßen Verfahrens werden die beschriebenen ungecoateten lithiierten oder teil-lithiierten Komposite im Anschluß an die mechanochemische Umsetzung einem Temperungsschritt bei Temperaturen zwischen 100 und 350°C, bevorzugt 150 und 250°C unterworfen. Während einer Temperungszeit von 5 Minuten bis 24 h erfolgt eine Umsetzung zwischen den lithiierten oder teil-lithiierten Graphit-/Graphenverbindungen sowie gegebenenfalls noch vorhandenem elementarem (metallischem) Lithium zu Legierungen des Lithiums und Siliciums (Lithiumsiliciden, z.B. Li₇Si₃). Bei Einhaltung ausreichender Auslagerungszeiten bei einer bestimmten Temperatur ist es möglich, sämtliches im Graphit bzw. Graphen intercaliertes Lithium zu extrahieren und für die Herstellung der Lithiumsilicide zu verwenden. Auf diese Art und Weise entsteht im Extremfall ein Silicidkomposit, bestehend aus lithiumfreiem oder sehr lithiumarmem Graphit/Graphen und Lithiumsiliciden. Die genaue Zusammensetzung ergibt sich aus der Stöchiometrie des Reaktionsansatzes.

In einer Verfahrensvariante können die erfindungsgemäßen Silicidkompositmaterialien mit der Summenformel SiₓC₁₀₋ₓLi_{z} auch durch Vermischung getrennt hergestellter pulverförmiger LiCₒ - Interkalationsverbindungen (o = 30 - 6) mit Siliciumpulver (1-100µm Korngröße) im gewünschten Molverhältnis und einer nachfolgenden Thermolysephase (130 bis 350°C für 5 min bis 24 h, bevorzugt 140 - 300°C) hergestellt werden.

Es wurde überraschend gefunden, dass sowohl die ungecoateten lithiierten oder teil-lithiierten Komposite als auch die Silicidkomposite im Kontakt mit Elektrolytlösungen und Carbonatlösemitteln stabiler als es pure Lithium-Graphitinterkalationsverbindungen sind. So wurde gefunden, dass im Molverhältnis Si:C:Li = 1:3,9:2,7 hergestellte Komposite bei Auslagerung in einem Gemisch aus Ethylencarbonat/Ethylmethylcarbonat (EC/EMC, 1:1 w/w) im DSC-Experiment (Radex System der Firma Systag) folgender Beginn einer exthermen Zersetzungsreaktion zu beobachten ist:
- Ungecoatete Lithiumgraphitinterkalationsverbindung LiC₆ (Li-Gehalt = 8,8 Gew.-%): Tₒₙₛₑₜ = 130 °C
- Nicht thermolysierter Li/Si/C - Komposit der Zusammensetzung Li_{2,7}SiC_{3,9} (Li-Gehalt = 20 Gew.-%): Tₒₙₛₑₜ = 170 °C
- Bei 150°C 4 Stunden thermolysierter Li/Si/C - Komposit der Zusammensetzung Li_{2,7}SiC_{3,9} (Li-Gehalt = 20 Gew.-%): Tₒₙₛₑₜ = 140 °C
- Bei 250°C 10 Stunden thermolysierter Li/Si/C - Komposit der Zusammensetzung Li_{2,7}SiC_{3,9} (Li-Gehalt = 20 Gew.-%): Tₒₙₛₑₜ = 150 °C

Trotz der im Vergleich mit LiC₆ bedeutend höheren Lithiumkonzentration in den erfindungsgemäßen Kompositmaterialien weisen Letztere eine verbesserte thermische Stabilität gegenüber einer EC/EMC-Mischung auf.

Weiterhin wurde überraschend gefunden, dass die Kompositmaterialien an Luft in der Regel nicht selbstentzündlich sind. Dies steht im Gegensatz zum Verhalten von ungecoatetem LiC₆.

Das elektrochemische Ruhepotential der erfindungsgemäßen Kompositmaterialien liegt unterhalb von ca. 2 V, bevorzugt unterhalb von 1 V gemessen gegen Li/Li+.

Die erfindungsgemäßen Kompositmaterialien können als hochkapazitive Anodenmaterialien für galvanische Zellen mit nichtwäßrigen Elektrolyten, beispielsweise Lithiumbatterien, eingesetzt werden.

### Beispiel 1:

In einer Planetenkugelmühle Pulverisette P 7 mit Zirkonoxid-Mahlbecher von Firma Fritsch wurde in einer Ar-gefüllten Handschuhbox eine Mischung bestehend aus:
- 1,80 g Si Pulver (Lieferant Wacker, Si-Gehalt 89,4 %, D₅₀ = 58 µm)
- 1,16 g Li-Pulver (Rockwood Lithium, ungecoatet, Li-Gehalt > 99 %, D₅₀ = 105 µm)
- 3,00 g Graphitpulver (SLP 30 von Firma Timcal)
zusammen mit 26 ZrO₂-Kugeln, Durchmesser 3 mm 4 h bei 400 upm im Reversionsbetrieb gemahlen.

Es wurden 5,56 g eines braun-goldenen Pulvers erhalten. Per Pulverröntgendiffratometrie lassen sich in diesem Produkt die Phasen LiC₁₂, LiC₆ Si-Metall und Li-Metall nachweisen. Graphit und Li/Si-Legierungen sind nicht nachweisbar.

Das Produkt erweist sich überraschend als nicht selbstentzündlich an Luft. Es reagiert nach kurzer Zeit heftig mit N-Methylpyrrolidon.

### Beispiel 2:

1,05 g einer nach Beispiel 1 hergestellten Mischung werden in geschlossenen Stahlautoklaven in Ar-Schutzgas 4 Stunden bei 150 °C thermolysiert. Danach sind per XRD folgende Phasen nachweisbar: Lithiumsilicide, Graphit und Si (verminderte Intensität). Metallisches Lithium ist nicht nachweisbar.

Das Produkt ist nicht selbstentzündlich an Luft. Es reagiert bei RT milde mit NMP.

### Beispiel 3:

1,16 g einer nach Beispiel 1 hergestellten Mischung werden in geschlossenen Stahlautoklaven in Ar-Schutzgas 10 Stunden bei 250 °C thermolysiert. Danach sind per XRD folgende Phasen nachweisbar: Lithiumsilicide (erhöhte Intensität), Graphit und Si (stark verminderte Intensität). Metallisches Lithium ist nicht nachweisbar.

Das Produkt ist nicht selbstentzündlich an Luft. Es reagiert bei RT nur äußerst schwach mit NMP.

Die Beispiele zeigen die Herstellung hochlithiumhaltiger Li/C/Si-Komposite und deren qualitative Zusammensetzung. Durch eine thermische Nachbehandlung verbessert sich die Stabilität gegenüber Reaktivlösemitteln, beispielhaft gezeigt am Gemisch mit N-Methylpyrrolidon.

## Patentansprüche

1. Kompositmaterialien mit der Summenformel SiₓC₁₀₋ₓLi_{z}, wobei
x einen beliebigen Wert von 1 bis 9 annehmen kann
und z = a (4,4x + 1/6 (10-x)) mit a = beliebiger Wert von 0,1 bis 1,
**dadurch gekennzeichnet, dass** sie aus einem innigen Gemisch bestehend aus lithiiertem oder teil-lithiiertem Graphit oder Graphen, pulverförmigem Silicium mit Partikelgrößen zwischen 1 und 100 µm sowie gegebenenfalls metallischem Lithium bestehen.

2. Stabilisierte Kompositmaterialien mit der Summenformel SiₓC₁₀₋ₓLi_{z}, **dadurch gekennzeichnet, dass** die Kompositmaterialien nach Anspruch 1 eine stabilisierende Coatingschicht aufweisen, die durch eine Nachbehandlung mit einem oder mehreren gasförmigen oder flüssigen Coatingmittel aufgebracht wird.

3. Verfahren zur Herstellung von Kompositmaterialien mit der Summenformel SiₓC₁₀₋ₓLi_{z}, wobei
x einen beliebigen Wert von 1 bis 9 annehmen kann
und z = a (4,4x + 1/6 (10-x)) mit a = beliebiger Wert von 0,1 bis 1, **dadurch gekennzeichnet, dass** eine Mischung aus Siliciumpulver mit einer Korngröße von 1 bis 100µm mit Lithiumpulver mit einer Korngröße von 5 bis 500 µm sowie Graphit- und/oder Graphenpulver im Molverhältnis Si/C/Li x/10-x/z mechanochemisch im Temperaturbereich 0 bis 120°C, bevorzugt 20 bis 100 °C unter Inertgas oder im Vakuum umgesetzt werden.

4. Verfahren zur Herstellung von Silicidkompositmaterialien mit der Summenformel SiₓC₁₀₋ₓLi_{z} nach Anspruch 3, **dadurch gekennzeichnet, dass**
die erhaltene Mischung einer Thermolysephase im Temperaturbereich von 150 bis 350°C für 5 Minuten bis 24 h unterzogen wird.

5. Verfahren zur Herstellung von Silicidkompositmaterialien mit der Summenformel SiₓC₁₀₋ₓLi_{z}, wobei
x einen beliebigen Wert von 1 bis 9 annehmen kann
und z = a (4,4x + 1/6 (10-x)) mit a = beliebiger Wert von 0,1 bis 1, **dadurch gekennzeichnet, dass** eine Mischung aus pulverförmigen ungecoateten LiCₒ - Interkalationsverbindungen mit o = 30 - 6 mit Siliciumpulver mit einer Korngröße von 1 bis 100µm im angegebenen Molverhältnis Si/C/Li x/10-x/z gemischt und danach einer Thermolysephase im Temperaturbereich von 130 bis 350°C für 5 Minuten bis 24 h, bevorzugt 140 - 300°C unterzogen wird.

6. Verfahren zur Herstellung stabilisierter Kompositmaterialien mit der Summenformel SiₓC₁₀₋ₓLi_{z} nach einem oder mehreren der Ansprüche 3 bis 5, **dadurch gekennzeichnet, dass** die hergestellten Kompositmaterialien mit einem gasförmigen oder flüssigen Coatingmittel nachbehandelt werden.

7. Verfahren nach Anspruch 6, **dadurch gekennzeichnet, dass** die gasförmigen Coatingmittel ausgewählt sind aus der Gruppe N₂, CO₂, CO, O₂, N₂O, NO, NO₂, HF, F₂, PF₃, PF₅, POF₃ und die flüssigen Coatingmittel ausgewählt sind aus der Gruppe Kohlensäureester; der Lithiumchelatoboratlösungen als Lösungen in organischen Lösungsmitteln, bevorzugt ausgewählt aus: sauerstoffhaltigen Heterocyclen, der Kohlensäureester, Nitrilen, Carbonsäureestern und Ketonen, schwefelorganische Verbindungen: Sulfite, Sulfone, Sultone; N-haltige organische Verbindungen, Phosphorsäure, organische phosphorhaltige Verbindungen, fluorhaltige organische und anorganische Verbindungen, teilfluorierte Kohlenwasserstoffe, BF₃, LiPF₆, LiBF₄, siliciumhaltige Verbindungen.

## Claims

1. Composite materials with the molecular formula SiₓC₁₀₋ₓLi_{z}, where x can take on any value from 1 to 9
and z = a(4.4x + 1/6(10-x)) with a = any value from 0.1 to 1, **characterized in that** they consist of an intimate mixture consisting of lithiated or partially lithiated graphite or graphene, powdered silicon with particle sizes between 1 and 100 µm and optionally metallic lithium.

2. Stabilized composite materials having the empirical formula SiₓC₁₀₋ₓLi_{z}, **characterized in that** the composite materials according to claim 1 have a stabilizing coating layer, which is applied by a post-treatment with one or more gaseous or liquid coating agents.

3. A process for preparing composite materials having the molecular formula SiₓC₁₀₋ₓLi_{z}, wherein
x can take on any value from 1 to 9
and z = a(4.4x + 1/6(10-x)) with a = any value from 0.1 to 1, **characterized in that** a mixture of silicon powder with a grain size of 1 to 100 µm with lithium powder with a grain size of 5 to 500 µm, and graphite and/or graphene powder in the molar ratio Si/C/Li of x/10-x/z is mechanochemically reacted in the temperature range 0 to 120 °C, preferably 20 to 100 °C under inert gas or in vacuo.

4. The process for preparing silicide composite materials having the molecular formula SiₓC₁₀₋ₓLi_{z} according to claim 3, **characterized in that** the resulting mixture is subjected to a thermolysis phase in the temperature range of 150 to 350 °C for 5 minutes to 24 h.

5. A process for preparing silicide composite materials having the molecular formula SiₓC₁₀₋ₓLi_{z}, wherein
x can take on any value from 1 to 9
and z = a(4.4x + 1/6(10-x)) with a = any value from 0.1 to 1, **characterized in that** a mixture of powdery uncoated LiCₒ intercalation compounds with o = 30 - 6 is mixed with silicon powder having a grain size of 1 to 100 µm in the specified molar ratio Si/C/Li of x/10-x/z and then subjected to a thermolysis phase in the temperature range of 130 to 350 °C for 5 minutes to 24 h, preferably 140-300 °C.

6. The process for preparing stabilized composite materials having the molecular formula SiₓC₁₀₋ₓLi_{z} according to any one or more of claims 3 to 5, **characterized in that** the composite materials prepared are post-treated with a gaseous or liquid coating agent.

7. The method according to claim 6, **characterized in that** the gaseous coating agents are selected from the group N₂, CO₂, CO, O₂, N₂O, NO, NO₂, HF, F₂, PF₃, PF₅, POF₃, and the liquid coating agents are selected from the group of carbonic acid esters; the lithium chelatoborate solutions as solutions in organic solvents, preferably selected from: oxygen-containing heterocycles, the carbonic acid esters, nitriles, carboxylic acid esters and ketones, organic sulfur compounds: sulfites, sulfones, sultones; N-containing organic compounds, phosphoric acid, organic phosphorus-containing compounds, fluorine-containing organic and inorganic compounds, partially fluorinated hydrocarbons, BF₃, LiPF₆, LiBF₄, silicon-containing compounds.

## Revendications

1. Matériaux composites de formule globale SiₓC₁₀₋ₓLi_{z}, dans laquelle
x peut admettre une valeur quelconque de 1 à 9
et z = a(4,4x + 1/6 (10-x)) avec a = valeur quelconque de 0,1 à 1,
**caractérisés en ce qu'**ils consistent en un mélange intime consistant en du graphite ou du graphène lithié ou partiellement lithié, du silicium pulvérulent d'une taille de particules comprise entre 1 et 100 µm, ainsi qu'éventuellement du lithium métallique.

2. Matériaux composites stabilisés de formule globale SiₓC₁₀₋ₓLi_{z}, **caractérisés en ce que** les matériaux composites selon la revendication 1 présentent une couche de revêtement stabilisante qui est appliquée par un traitement ultérieur avec un ou plusieurs agents de revêtement gazeux ou liquides.

3. Procédé de fabrication de matériaux composites de formule globale SiₓC₁₀₋ₓLi_{z}, dans laquelle
x peut admettre une valeur quelconque de 1 à 9
et z = a(4,4x + 1/6 (10-x)) avec a = valeur quelconque de 0,1 à 1, **caractérisé en ce qu'**un mélange de poudre de silicium d'une granulométrie de 1 à 100 µm est réalisé de manière mécanochimique avec de la poudre de lithium d'une granulométrie de 5 à 500 µm ainsi que de la poudre de graphite et/ou de graphène dans le rapport molaire Si/C/Li x/10-x/z dans la plage de température de 0 à 120 °C, de préférence de 20 à 100 °C sous un gaz inerte ou sous vide.

4. Procédé de fabrication de matériaux composites de siliciure de formule globale SiₓC₁₀₋ₓLi_{z} selon la revendication 3, **caractérisé en ce que** le mélange obtenu est soumis à une phase de thermolyse dans la plage de température de 150 à 350 °C pour une durée de 5 minutes à 24 heures.

5. Procédé de fabrication de matériaux composites de siliciure de formule globale SiₓC₁₀₋ₓLi_{z}, dans lequel
x peut admettre une valeur quelconque de 1 à 9
et z = a(4,4x + 1/6 (10-x)) avec a = valeur quelconque de 0,1 à 1, **caractérisé en ce qu'**un mélange de composés d'intercalation de LiCₒ pulvérulents non revêtus, avec o = 30 - 6, est mélangé avec de la poudre de silicium d'une granulométrie de 1 à 100 µm dans le rapport molaire Si/C/Li x/10-x/z indiqué, puis soumis à une phase de thermolyse dans la plage de température de 130 à 350 °C pour une durée de 5 minutes à 24 heures, de préférence de 140 à 300 °C.

6. Procédé de fabrication de matériaux composites stabilisés de formule globale SiₓC₁₀₋ₓLi_{z} selon l'une ou plusieurs des revendications 3 à 5, **caractérisé en ce que** les matériaux composites fabriqués sont soumis à un traitement ultérieur avec un agent de revêtement gazeux ou liquide.

7. Procédé selon la revendication 6, **caractérisé en ce que** les agents de revêtement gazeux sont choisis dans le groupe N₂, CO₂, CO, O₂, N₂O, NO, NO₂, HF, F₂, PF₃, PF₅, POF₃ et les agents de revêtement liquides sont choisis dans le groupe de l'ester d'acide carbonique ; des solutions de chelatoborate de lithium sous forme de solutions dans des solvants organiques, choisis de préférence parmi : les hétérocycles contenant de l'oxygène, l'ester d'acide carbonique, les nitriles, les esters d'acide carboxylique et les cétones, des composés organiques soufrés : les sulfites, les sulfones, les sultones ; des composés organiques contenant de l'azote, de l'acide phosphorique, des composés organiques contenant du phosphore, des composés organiques et inorganiques contenant du fluor, des hydrocarbures partiellement fluorés, du BF₃, du LiPF₆, du LiBF₄, des composés contenant du silicium.
